# EUROPÄISCHE PATENTSCHRIFT

(11) **EP 2 443 721 B1**
(45) Veröffentlichungstag und Bekanntmachung des Hinweises auf die Patenterteilung: **16.01.2013**
(21) Anmeldenummer: 10720755.7
(22) Anmeldetag: 17.05.2010
(51) Int. Cl.: B60L 11/14, H02J 7/00, B60L 11/18

(54) **VERBINDUNG ZWISCHEN LADESTATION UND ELEKTROFAHRZEUG**
CONNECTION BETWEEN A CHARGING STATION AND AN ELECTRIC VEHICLE
CONNEXION ENTRE UNE STATION DE CHARGE ET UN VÉHICULE ÉLECTRIQUE

(30) Priorität: 15.06.2009 DE 102009025302
(43) Veröffentlichungstag der Anmeldung: 25.04.2012
(73) Patentinhaber: RWE AG, 45128 Essen (DE)
(72) Erfinder: GAUL, Armin, 59379 Selm (DE); DIEFENBACH, Ingo, 59425 Unna (DE)
(74) Vertreter: Cohausz & Florack
(86) Internationale Anmeldenummer: PCT/EP2010/056693
(87) Internationale Veröffentlichungsnummer: WO 2010/145898

(56) Entgegenhaltungen:
- EP-A1- 2 048 762
- WO-A2-2009/052447
- US-A- 5 548 200
- US-B1- 6 373 380

## Beschreibung

Der Gegenstand betrifft ein Verfahren und eine Vorrichtung zum Verbinden einer Ladestation mit einem Elektrofahrzeug.

Die Verwendung von Elektrofahrzeugen verspricht eine Lösung vieler aktueller Probleme des Individualverkehrs: der für ihren Antrieb benötigte Strom kann auf umweltfreundliche Weise hergestellt werden, es entstehen keine Abgase am Fahrzeug selbst, die Lärmbelastung wird reduziert und der Elektroantrieb selbst ermöglicht prinzipbedingt einen höheren Wirkungsgrad als ein Motor, welcher auf der Verbrennung fossiler Brennstoffe beruht.

Zum breiten Masseneinsatz von Elektrofahrzeugen muss aber auch eine einfache und flächendeckende Möglichkeit der Energieaufladung geschaffen werden analog zum bekannten Tankstellennetz für flüssigen Kraftstoff. Hierzu müssen auch Fragen der Abrechnung eines Entgelts für ein solches Aufladen beantwortet werden. Augenblicklich ist zwar zumindest flächendeckend die Infrastruktur für eine Stromversorgung vorhanden, der Energieverbrauch an einer Steckdose etwa kann aber nicht ohne Weiteres nach dem jeweiligen Verbraucher aufgeschlüsselt und zeitnah ermittelt, ggf. begrenzt und auf der Stelle fakturiert werden.

Um von jedermann nutzbare Stromtankstellen, also öffentlich nutzbare Ladestationen, praktikabel zu machen, müssen diese aber auch so einfach zu bedienen sein wie Zapfsäulen für flüssige Kraftstoffe und auch eine analog mögliche Begrenzung und Abrechnung des Aufladens ermöglichen. Aus Sicht des Fahrzeugnutzers soll sich also möglichst wenig ändern.

Derzeit bestehen Bestrebungen nach einer Normierung der Kommunikation zwischen einem Elektrofahrzeug und einer Ladestation. Insbesondere sollen primäre Ladeparameter, wie Signalisierung einer Ladebereitschaft durch die Ladestation, Signalisierung einer Ladebereitschaft durch das Elektrofahrzeug und Signalisierung eines Bemessungswertes der Stromversorgung durch die Ladestation an das Elektrofahrzeug, normiert werden. So existiert ein Vorentwurf zur DIN IEC 61851-1, welcher allgemeine Anforderungen an konduktive Ladesysteme für Elektrofahrzeuge beschreibt.

Elektrofahrzeuge gemäß dieser Norm können lediglich Informationen über einen höchsten kontinuierlichen Bemessungsstrom der Ladestation empfangen, wobei diese Information mittels einer Pulsweitenmodulation (PWM) des Tastverhältnisses des Signals übertragen wird. In Reaktion auf ein solches Signal kann das Elektrofahrzeug der Ladestation mitteilen, dass es für den Empfang des Ladestroms bereit ist, woraufhin der Ladestrom durch die Ladestation freigeschaltet wird. Diese Kommunikation zwischen Ladestation und Elektrofahrzeug erfolgt über einen Pilotleiter, welcher bevorzugt leistungslos ist und lediglich Informationen übertragen kann.

Aus der Veröffentlichung US 5,548,200 A ist ein Verfahren bekannt, bei dem zwischen einer Ladestation und einem Elektrofahrzeug Informationen zu einem Ladevorgang ausgetauscht werden. Diese Informationen werden gemäß dieser Veröffentlichung auf einem hierfür vorgesehenen Leiterpfad zwischen Fahrzeug und Ladestation ausgetauscht.

Aus der Veröffentlichung WO 2009/052447 A2 ist bekannt, über einen Energieleiter einen Ladeparameter auszutauschen. Hierbei wird zu Beginn eines Ladevorgangs ein Ladeparameter zwischen Fahrzeug und Ladestation ausgetauscht.

Aus der Veröffentlichung US 6,373,380 B1 ist ebenfalls eine Kommunikation zwischen einer Ladestation und einem Elektrofahrzeug bekannt. Dies trifft auch auf die Veröffentlichung EP 2 048 762 A1 zu, die ebenfalls eine Kommunikation zwischen einem Fahrzeug und einer Ladestation beschreibt.

Für Energieversorgungsunternehmen als auch für Nutzer von Elektrofahrzeugen ist jedoch nicht nur das einfache Empfangen und Einschalten des Ladestroms von Bedeutung, sondern es müssen weitere Informationen, sogenannte ergänzende Ladeparameter, zwischen Fahrzeug und Ladestation ausgetauscht werden werden, welche eine benutzerbezogene Abrechnung ermöglichen. Darüber hinaus muss es möglich sein, unterschiedliche Ladeparameter, wie beispielsweise unterschiedliche Stromstärken und unterschiedliche Bezugstarife zwischen Elektrofahrzeug und Ladestation auszuhandeln. Darüber hinaus sollten Informationen über die Identität des Elektrofahrzeugs bzw. des Nutzers des Elektrofahrzeugs als auch Informationen über die Identität der Ladestation zwischen Ladestation und Elektrofahrzeug austauschbar sein. Der Austausch dieser Daten ist gemäß des Vorentwurfs der Norm nicht vorgesehen.

Aus den zuvor hergeleiteten Nachteilen ergibt sich für den Gegenstand die Aufgabe, eine Kommunikation zwischen Elektrofahrzeugen und Ladestationen zum Aushandeln von ergänzenden Ladeparametern über den Energieleiter sicherzustellen.

Diese Aufgabe wird gegenständlich durch ein Verfahren zum Verbinden eines Elektrofahrzeugs mit einer Ladestation gelöst, welches umfasst
a) Empfangen auf einem mit einer Ladestationen verbundenen ersten Pilotleiter ein Kommunikationssignal umfassend eine ladestationsseitige Aufforderung zur Kommunikation von primären Ladeparametern,
b) Kommunizieren auf einem mit der Ladestation verbundenen Energieleiter zumindest ein Ladeparametersignal umfassend zumindest Informationen über ergänzende Ladeparameter,
c) Bewirken einer Freigabe eines Ladestroms über den Energieleiter gemäß der nach b) kommunizierten ergänzenden Ladeparameter.

Von den Energieversorgern wird angestrebt, sogenannte "intelligente" Ladestationen mit "intelligenten" Fahrzeugen zu verbinden. Hierbei erfolgt eine Kommunikation von ergänzenden Ladeparametern über den Energieleiter. Problematisch ist dieser Ansatz jedoch dahingehend, dass Fahrzeuge, die ausschließlich nach Norm arbeiten, eine solche Kommunikation über den Energieleiter nicht beherrschen. Dies führt dazu, dass solche Fahrzeuge nicht an "intelligente" Ladestationen angeschlossen werden können, da diese Fahrzeuge das Aushandeln von ergänzenden Ladeparametern über den Energieleiter nicht beherrschen.

Es ist erkannt worden, dass der Austausch von primären Ladeparametern, insbesondere der Austausch eines Bemessungswertes der Stromversorgung von Ladestation zu Elektrofahrzeug, nicht ausreichend ist, um eine sichere Abrechnung des bezogenen Ladestroms zu ermöglichen. Insbesondere ist bei diesem Ansatz stets ladestationsseitig durch den Benutzer zumindest eine Zahlungsinformation anzugeben. Dies ist aus Gründen des Komforts nicht gewünscht. Vielmehr soll die Zahlungsinformation im Wesentlichen unabhängig von Benutzereingaben zwischen Elektrofahrzeug und Basisstation ausgetauscht werden.

Ist nun ein Elektrofahrzeug nicht dazu hergerichtet, solche ergänzenden Ladeparameter zu kommunizieren, wird vorgeschlagen, dass zwischen dem Elektrofahrzeug und der Ladestation eine Einrichtung vorgesehen ist, welche ladestationsseitig mit dem Energieleiter und dem ersten Pilotleiter verbunden ist. Fahrzeugseitig ist diese Einrichtung mit einem zweiten Pilotleiter und einem Energieleiter verbunden. Mittels der so zwischen Basisstation und Fahrzeug geschalteten Einrichtung können nach dem Empfangen der primären Ladeparameter in der Einrichtung durch die Einrichtung auf dem Energieleiter Informationen über ergänzende Ladeparameter mit der Ladestation ausgetauscht werden. Das Elektrofahrzeug nimmt an dieser Kommunikation von ergänzenden Ladeparametern nicht aktiv teil.

Das Elektrofahrzeug kann über einen zweiten Pilotleiter von der Einrichtung lediglich Informationen darüber erhalten, dass der Ladestrom gegebenenfalls freigegeben wurde oder zur Freigabe bereit ist und gegebenenfalls Informationen über den Bemessungswert der Stromversorgung. Dies kann in Form eines primären Ladeparameters erfolgen, der auf dem zweiten Pilotleiter zu dem Elektrofahrzeug übermittelt wird.

Die Einrichtung übernimmt die "intelligente" Kommunikation, welche den Austausch von Vertragsparametern und Netzparametern ermöglicht. Vertragsparameter können beispielsweise vertraglich vereinbarte Stromtarife, vertraglich vereinbarte Ladungsrestriktionen, z.B. maximal beziehbare Stromstärken, Benutzeridentifikationen und dergleichen sein. Insbesondere die Benutzeridentifikation kann durch die zwischengeschaltete Einrichtung erfolgen. Insbesondere kann diese Einrichtung die Benutzeridentifikation gespeichert haben oder diese von einem Benutzer abfragen. Dies kann beispielsweise berührungslos über einen von dem Benutzer mitgeführten Transponder erfolgen. Darüber hinaus können Netzparameter, wie beispielsweise momentan maximal verfügbare Stromstärken, ausgehandelt werden. Auch können während des gesamten Ladevorgangs die ergänzenden Ladeparameter angepasst werden, wobei hierbei über den Energieleiter die ergänzenden Ladeparameter auch während des Ladevorgangs zwischen Ladestation und Einrichtung kommuniziert werden können.

Darüber hinaus kann die Einrichtung Informationen über bezogene Energiemengen, welche von der Ladestation erhalten wurden, mit der Benutzeridentifikation versehen und zurück an die Ladestation übermitteln werden. Hierdurch wird eine sichere Abrechnung der bezogenen Energie gewährleistet, wobei das Elektrofahrzeug selber nicht über diese Fähigkeiten verfügen muss.

Mittels des gegenständlichen Verfahrens ist es möglich, Elektrofahrzeuge, die lediglich primäre Ladeparameter austauschen können, mit Ladestationen zu verbinden, welche ergänzende Ladeparameter für eine Freigabe eines Ladestroms benötigen.

Nachdem ergänzende Ladeparameter ausgetauscht wurden, kann durch die Einrichtung die Freigabe des Ladestroms über den Energieleiter gemäß der kommunizierten ergänzenden Ladeparameter erfolgen. Zunächst kann jedoch über einen zweiten Pilotleiter das Fahrzeug darüber informiert werden, dass Ladestrom zur Verfügung steht. Diese Information kann normgerecht erfolgen, da das Fahrzeug lediglich Informationen darüber erhalten muss, dass ein Ladestrom zur Verfügung steht. Quittiert das Fahrzeug diese Information über den zweiten Pilotleiter kann die Freigabe erfolgen. Hierzu kann über den ersten Pilotleiter ein Freigabesignal an die Ladestation übermittelt werden. Auch ist es möglich, dass unmittelbar über den Energieleiter das Freigabesignal an die Ladestation übermittelt wird. Die Ladestation schaltet den Ladestrom frei. Weitere ergänzende Ladeparameter sind in dem Fahrzeug nicht bekannt und werden nicht an das Fahrzeug kommuniziert.

Bei dem Elektrofahrzeug kann es sich sowohl um ein Fahrzeug, welches ausschließlich einen Elektromotor aufweist, als auch um ein Fahrzeug handeln, welches sowohl einen Elektromotor als auch einen Verbrennungsmotor, wie etwa einen Ottomotor oder eine andere Art von Motor aufweist. Die Ladestation kann sowohl eine öffentliche stationäre Ladestation sein als auch eine Ladestation, welche nur einem bestimmten Personenkreis zugänglich ist. Bei der Ladestation kann es sich auch um eine mobile Ladestation handeln. Die Ladestation kann Strom aus einem Stromnetz beziehen, elektrische Energie in Akkumulatoren vorhalten oder einen Generator aufweisen, mit dem elektrische Energie erzeugt werden kann. Die Verbindung zwischen Ladestation und Elektrofahrzeug kann elektromechanisch mittels einer Kabelgarnitur hergestellt werden.

Der Pilotleiter und der Energieleiter können gemeinsam in einer Kabelgarnitur geführt werden. Zumindest eine Kabelgarnitur kann fest mit der Ladestation oder fest mit dem Elektrofahrzeug verbunden sein. Die Kabelgarnitur kann eine Vielzahl von einzelnen Leitern umfassen. Insbesondere kann die Kabelgarnitur einen Leistungsleiter (Energieleiter) zum Übertragen des Ladestroms und einen Pilotleiter umfassen. Bei dem Ladestrom kann es sich um Gleichstrom, um Wechselstrom oder um Drehstrom handeln.

Gemäß einem vorteilhaften Ausführungsbeispiel wird vorgeschlagen, dass auf dem ersten Pilotleiter eine Aufforderung zur seriellen Kommunikation von Ladeparametern empfangen wird. Diese Aufforderung zur seriellen Kommunikation von Ladeparametern kann beispielsweise normgerecht erfolgen. Hierbei kann beispielsweise ein auf eine bestimmte Weise moduliertes Signal auf dem Pilotleiter angelegt werden.

Gemäß einem vorteilhaften Ausführungsbeispiel wird vorgeschlagen, dass das Kommunikationssignal ein pulsweitenmoduliertes Signal ist. Dies kann den technischen Effekt haben, dass die Erzeugung der Signale, die Überlagerung der Signale auf einen Gleichspannungspegel und die Erfassung der Signale mit einfachen Mitteln zu implementieren ist. Es kann sein, dass der obere Scheitelwert des pulsweitenmodulierten Signals dem Gleichspannungspegel auf dem Pilotleiter entspricht. Es kann sein, dass der untere Scheitelwert des pulsweitenmodulierten Signals einer negativen Spannung entspricht. Insbesondere kann der untere Scheitelwert des pulsweitenmodulierten Signals einer negativen Spannung mit dem Betrag des Gleichspannungspegels auf dem Pilotleiter entsprechen.

Gemäß einem vorteilhaften Ausführungsbeispiel wird vorgeschlagen, dass in dem Tastverhältnis des Kommunikationssignals die Aufforderung zur Kommunikation codiert ist. Dies kann eine Aufforderung zur seriellen Kommunikation sein. Insbesondere kann das Kommunikationssignal ein Tastverhältnis von 90 Prozent aufweisen. Beim Empfang eines entsprechenden PWM Signals kann in der zwischen Elektrofahrzeug und Fahrzeug angeordneten Einrichtung eine Kommunikation von ergänzenden Ladeparametern über den Energieleiter ausgelöst werden. Dieses normgerechte Signal kann beispielsweise das Generieren eines ersten vorbestimmten Gleichspannungspegels auf dem Pilotleiter sein.

Das Generieren eines ersten vorbestimmten Gleichspannungspegels auf einem Pilotleiter kann durch Anlegen eines vorbestimmten Gleichspannungspegels auf der Seite der Ladestation an den Pilotleiter erfolgen. Hierbei ist der Gleichspannungspegel diejenige Gleichspannung, welche sich nach Abzug etwaig auf dem Pilotleiter überlagerter und zeitlich variabler Signalspannungen ergibt.

Gemäß einem vorteilhaften Ausführungsbeispiel wird auch vorgeschlagen, dass das Kommunikationssignal einen ersten Gleichspannungspegel aufweist und dass in Reaktion auf das Kommunikationssignal ein zweiter Gleichspannungspegel auf dem Pilotleiter bewirkt wird. Beispielsweise ist es möglich, dass in der zwischen Ladestation und Elektrofahrzeug angeordneten Einrichtung in Reaktion auf den Empfang des Kommunikationssignals dieses normkonform verändert wird, derart, dass der Ladestation gegenüber der Anschluss eines normkonformen Fahrzeugs simuliert wird. Dies kann beispielsweise dann erforderlich sein, wenn das Elektrofahrzeug zusammen mit der Einrichtung an eine lediglich normkonforme Ladestation angeschlossen wird. Dann muss die Einrichtung normkonform reagieren. Dies kann beispielsweise darin liegen, dass der Gleichspannungspegel des Kommunikationssignals durch die Einrichtung abgesenkt wird, derart, dass das Absenken in der Ladestation detektierbar wird.

Gemäß einem vorteilhaften Ausführungsbeispiel wird vorgeschlagen, dass die Schritte a) - c) durch eine räumlich von der Ladestation und dem Elektrofahrzeug getrennte Kommunikationseinheit durchgeführt werden. Wie zuvor erläutert, kann zwischen einer Ladestation und einem Elektrofahrzeug eine Einrichtung vorgesehen sein, welche als Kommunikationseinheit gebildet ist. Diese Einrichtung kann mit einem ersten Kabel an eine Ladestation verbunden werden und mit einem zweiten Kabel an ein Elektrofahrzeug. Mittels der Kommunikationseinheit ist es möglich, auf eingangsseitig dem Pilotleiter zunächst eine Aufforderung zur Kommunikation von primären Ladeparametern zu empfangen, um anschließend auf dem Energieleiter die ergänzenden Ladeparameter mit der Ladestation auszuhandeln.

Gegenüber dem Elektrofahrzeug kann die Kommunikationseinheit die Funktionalität der Ladestation widerspiegeln. Das bedeutet, dass ausgangsseitig in Richtung des Elektrofahrzeugs in der Kommunikationseinheit die der Kommunikationseinheit der Ladestation nachgebildete Kommunikationsmittel angeordnet sind, welche normgerecht und/oder identisch zu der Kommunikation von Ladesäule zur Kommunikationseinheit über den ersten Pilotleiter eine Kommunikation von Kommunikationseinheit zu Elektrofahrzeug über den zweiten Pilotleiter nachbilden. Gegenüber dem Elektrofahrzeug erscheint die Kommunikationseinheit somit als ob sie eine Ladestation wäre. Das Elektrofahrzeug muss sich lediglich normgerecht gegenüber der Kommunikationseinheit verhalten. Das Aushandeln von ergänzenden Ladeparametern erfolgt mittels der Kommunikationseinheit über den Energieleiter.

Gemäß einem vorteilhaften Ausführungsbeispiel wird vorgeschlagen, dass bei einem erfolgreichen Kommunizieren von Informationen über Ladeparameter nach Schritt b) der Schritt c) eingeleitet wird. Es ist erkannt worden, dass nach dem Empfang einer Aufforderung zur Kommunikation auf dem Pilotleiter über den Energieleiter ergänzende Ladeparameter kommuniziert werden können. In dem Schritt b) wird somit über den Energieleiter eine Mehrzahl von ergänzenden Ladeparametern mit der Ladestation ausgetauscht. Diese Ladeparameter können beispielsweise Vertragsparameter als auch Netzparameter sein und beispielsweise über die Laufzeit der Ladedauer veränderlich sein. Ist die Kommunikation der ergänzenden Ladeparameter erfolgreich verlaufen, so kann eine Freigabe des Ladestroms erfolgen. Diese Freigabe kann beispielsweise über den ersten Pilotleiter und/oder den Energieleiter in Richtung der Ladestation erfolgen.

Durch das Elektrofahrzeug kann die Freigabe des Ladestroms über den zweiten Pilotleiter erfolgen. Dies kann nach dem Aushandeln der ergänzenden Ladeparametern und vor der Freigabe über den ersten Pilotleiter und/oder den Energieleiter in Richtung der Ladestation erfolgen. Das Elektrofahrzeug empfängt über den Energieleiter den Ladestrom, ohne ergänzende Ladeparameter mit der Ladestation ausgetauscht zu haben.

Gemäß einem vorteilhaften Ausführungsbeispiel wird auch vorgeschlagen, dass bei einem erfolglosen Kommunizieren von Informationen über Ladeparameter nach Schritt b) alternativ zu Schritt c) auf einem mit dem Elektrofahrzeug verbundenen zweiten Pilotleiter ein Ladesignal umfassend zumindest einen Bemessungswert für eine Stromversorgung ausgesendet wird. Es ist erkannt worden, dass bei einem Anschluss der Kommunikationseinheit zwischen Ladesäule und Elektrofahrzeug nicht immer eine Kommunikation von ergänzenden Ladeparametern möglich ist. Dies ist beispielsweise dann der Fall, wenn die Ladesäule eine "herkömmliche" Ladesäule ist, welche lediglich normgerecht kommuniziert. Eine solche normgerechte Kommunikation bewirkt, dass auf dem ersten Pilotleiter entweder eine Aufforderung zur seriellen Kommunikation oder ein Bemessungswert für eine Stromversorgung mittels eines modulierten, vorzugsweise pulsweitenmodulierten Signals empfangen wird. Die Kommunikationseinheit kann zunächst versuchen, über den Energieleiter die ergänzenden Ladeparameter mit der Ladestation auszutauschen. Falls die Ladestation diese Funktionalität nicht unterstützt, schlägt diese Kommunikation fehl. In diesem Fall kann die Kommunikationseinheit darauf schließen, dass die angeschlossene Ladestation lediglich herkömmlich ist. Gegenüber dem Elektrofahrzeug kann die Kommunikationseinheit dann über den zweiten, mit dem Elektrofahrzeug verbundenen Pilotleiter in herkömmlicher Weise einen Bemessungswert für eine Stromversorgung kommunizieren. Dies kann ebenfalls über ein moduliertes, vorzugsweise pulsweitenmoduliertes Signal erfolgen. Bei dieser Ausgestaltung verhält sich die Ladesäule gegenüber der Kommunikationseinheit normgerecht. Darüber hinaus verhält sich die Kommunikationseinheit gegenüber dem Fahrzeug ebenfalls normgerecht und spiegelt im Wesentlichen die Funktionalität der Ladesäule gegenüber dem Elektrofahrzeug. Das heißt, dass die Kommunikationseinheit dem Elektrofahrzeug signalisiert, dass ein Laden mit den gemäß des Bemessungswertes für eine Stromversorgung bestimmten Strömen möglich ist. Die Kommunikationseinheit agiert in der Art eines "Tunnels" zwischen der Ladestation und dem Elektrofahrzeug, ohne dass ergänzende Ladeparameter auf dem Energieleiter mit der Ladestation ausgetauscht werden müssen.

Gemäß einem vorteilhaften Ausführungsbeispiel wird auch vorgeschlagen, dass bei einem Empfangen eines Ladesignals umfassend einen Bemessungswert für eine Stromversorgung auf dem ersten Pilotleiter ein entsprechendes Ladesignal auf einem zweiten Pilotleiter ausgesandt wird. Beispielsweise ist es möglich, dass die Ladestation eine herkömmliche Ladestation ist, welche keine Aufforderung zur seriellen Kommunikation über den ersten Pilotleiter an die Kommunikationseinheit übermittelt, sondern lediglich einen Bemessungswert für eine Stromversorgung. Diese Übermittlung des Ladesignals kann normgerecht sein. In diesem Fall kann die Kommunikationseinheit schließen, dass die Ladestation keine ergänzenden Ladeparameter austauschen kann. Dies führt dazu, dass im zweiten Pilotleiter ein Ladesignal ausgesandt wird, welches dem auf dem ersten Pilotleiter empfangenen Ladesignal entspricht.

Gemäß einem vorteilhaften Ausführungsbeispiel wird auch vorgeschlagen, dass das Ladeparametersignal mittels eines Power-Line-Communication (PLC) Moduls auf dem Energieleiter moduliert wird. Die Kommunikationseinheit kann beispielsweise ein PLC Modem derart ansteuern, dass dieses auf den Energieleiter das Ladeparametersignal, umfassend zumindest die ergänzenden Ladeparameter, moduliert. Mittels der Kommunikationseinheit ist es möglich, über den Energieleiter und das PLC Modem mit der Ladestation zu kommunizieren. Hiermit ist der Austausch von ergänzenden Ladeparametern über den Energieleiter möglich, ohne dass das Elektrofahrzeug Kenntnis von den ergänzenden Ladeparametern hat.

Ein weiterer Gegenstand ist eine Vorrichtung umfassend Empfangsmittel eingerichtet zum Empfangen eines Kommunikationssignals umfassend eine ladestationsseitige Aufforderung zur Kommunikation von primären Ladeparametern über einen ersten Pilotleiter, Kommunikationsmittel eingerichtet zum Kommunizieren zumindest eines Ladeparametersignals umfassend zumindest Informationen über ergänzende Ladeparameter auf einem mit einer Ladestation elektrisch verbundenen Energieleiter, derart, dass eine Freigabe eines Ladestroms über den Energieleiter gemäß der kommunizierten Ladeparameter bewirkbar ist.

Ein Freigabesignal zur Freigabe des Ladestroms, welcher über den Energieleiter fließt, kann dabei von der Vorrichtung, welche die Kommunikationseinheit sein kann, an die Ladestation übermittelt werden.

Die Vorrichtung kann eine sogenannte "ID-Box" sein, welche als Kommunikationseinheit zwischen die Ladestation und das Elektrofahrzeug geschaltet ist. Die Vorrichtung kann auch in ein bestehendes Fahrzeug nachgerüstet werden. Hierbei kann die Vorrichtung in einem Bauraum im Fahrzeug angeordnet werden. Auch kann die Vorrichtung als Zwischenstecker auf die Ladebuchse im Fahrzeug aufgesteckt werden und gegenüber den dem Ladekabel als Buchse des Fahrzeugs agieren. Auf der Ladestationsseite kann ein erstes Kabel in die Vorrichtung eingesteckt sein, welches den Energieleiter und den Pilotleiter umfasst. Auf der Elektrofahrzeugseite kann ein zweites Kabel eingesteckt sein, welches ebenfalls einen Energieleiter und einen zweiten Pilotleiter umfasst. Der Energieleiter kann in der Vorrichtung von dem ladestationsseitigen Eingang zu dem fahrzeugseitigen Eingang kurzgeschlossen werden. Über Abgriffe können Ladeparametersignale über ergänzende Ladeparameter auf den Energieleiter aufmoduliert werden und von dem Energieleiter abgegriffen werden. Hierüber ist eine Kommunikation der Ladeparametersignale mit der Ladestation möglich.

Gemäß einem vorteilhaften Ausführungsbeispiel wird vorgeschlagen, dass die Empfangsmittel mit dem ersten Pilotleiter verbindbar sind. Dies kann beispielsweise über einen Steckkontakt erfolgen. Beispielsweise ein genormter, mehrpoliger, beispielsweise siebenpoliger oder sechspoliger, Stecker kann eine erste Kabelgarnitur aufnehmen und in die Vorrichtung eingesteckt werden. Dieser Stecker kann beispielsweise drei Phasen eines Drehstromnetzes (L1, L2, L3), einen Nullleiter (N) und einen Erdleiter (PE) enthalten. Darüber hinaus kann ein Pilotleiter und ein weiterer Erdleiter vorgesehen sein.

In der Vorrichtung können gemäß einem vorteilhaften Ausführungsbeispiel auch Sendemittel vorgesehen sein. Die Sendemittel können beispielsweise fahrzeugseitig mit einem zweiten mit einem Elektrofahrzeug verbindbaren zweiten Pilotleiter verbindbar sein. Beispielsweise ist es möglich, dass ein zweiter Steckkontakt vorgesehen ist, über den der zweite Pilotleiter kontaktierbar ist. Somit können die Sendemittel mit dem Fahrzeug über eine zweite Kabelgarnitur verbunden werden. In der zweiten Kabelgarnitur können ebenfalls mehrere, zum Beispiel sechs oder sieben, Adern vorgesehen sein. Dabei können Energieleiter (L1, L2, L3, N, PE), wie zuvor erläutert, neben einem zweiten Pilotleiter und einer zweiten Erdleitung vorgesehen sein.

Die Sendemittel in der Vorrichtung können den in der Ladestation vorgesehenen Sendemitteln nachgebildet sein. Das bedeutet, dass die Sendemittel in der Vorrichtung sich entsprechend den in einer Ladesäule angeordneten, normgerecht arbeitenden Sendemitteln gebildet sein können. Das heißt, dass die Sendemittel in Richtung des Elektrofahrzeugs normgerechte Kommunikationssignale aussenden können, welche beispielsweise Bemessungswerte für eine Stromversorgung enthalten können. Die mit den Sendemitteln ausgesendeten Signale können moduliert, vorzugsweise pulsweitenmoduliert sein. Die mit den Sendemitteln ausgesendeten Signale können beispielsweise gegenüber dem Fahrzeug indizieren, dass eine Infrastruktur zur Energielieferung bereit ist. In Reaktion auf ein solches Signal kann fahrzeugseitig ein Schalter umgelegt werden, welcher den Sendemitteln anzeigt, dass das Fahrzeug zur Energieaufnahme bereit ist. Nach Empfang dieses Signals, dass das Fahrzeug zur Energieaufnahme bereit ist, kann mittels der Vorrichtung entweder über den ersten Pilotleiter oder über den Energieleiter der Ladestation die Freigabe des Ladestroms übermittelt werden, woraufhin die Ladestation über den Energieleiter den Ladestrom freigibt.

Gemäß einem vorteilhaften Ausführungsbeispiel wird auch vorgeschlagen, dass Steuermittel die Kommunikationsmittel zum Modulieren von Signalen auf den Energieleiter ansteuern. Die Steuermittel können beispielsweise in der Vorrichtung vorgesehen sein. Außerdem ist es mittels der Steuermittel möglich, die Empfangsmittel zu steuern und die auf den Empfangsmitteln empfangenen Signale auszuwerten. Darüber hinaus ist es mit den Steuermitteln möglich, die Sendemittel anzusteuern und die auf den Sendemitteln empfangenen Signale auszuwerten. Auch ist es möglich, mittels der Steuermittel die Empfangsmittel derart anzusteuern, dass diese über den ersten Pilotleiter ein Signal an die Ladestation übermitteln. Darüber hinaus können die Steuermittel die Sendemittel derart ansteuern, dass über den zweiten Pilotleiter Signale an das Elektrofahrzeug übermittelt werden.

Gemäß einem vorteilhaften Ausführungsbeispiel wird auch vorgeschlagen, dass Kommunikationsmittel und die Empfangsmittel in einem von der Ladestation und dem Elektrofahrzeug getrennten Gehäuse angeordnet sind. Dieses getrennte Gehäuse kann beispielsweise mit zwei Aufnahmen ausgestaltet sein, wobei ein erster Steckkontakt und ein zweiter Steckkontakt vorgesehen sind. Der erste Steckkontakt kann beispielsweise ladesäulenseitig sein und mit einer Ladesäule verbindbar sein und der zweite Steckkontakt kann fahrzeugseitig mit einem Fahrzeug verbindbar sein. Die Steckkontakte können jeweils Energieleiter aufnehmen. In dem Gehäuse kann der Energieleiter zwischen den Steckkontakten durchgeschleift sein. Das Gehäuse kann als Nachrüstsatz in ein Fahrzeug eingebaut sein. Das Gehäuse kann an die Buchsennische der Ladebuchse des Fahrzeugs angepasst und dort verbaut werden.

Gemäß einem vorteilhaften Ausführungsbeispiel wird auch vorgeschlagen, dass der Energieleiter ein Teil eines Ein- oder Mehrphasenleiters ist, wobei der Energieleiter zur Übertragung von Energie zwischen der Ladestation und dem Elektrofahrzeug gebildet ist. Das Laden von Elektrofahrzeugen bzw. der dort angeordneten Batterien erfolgt entweder über ein Einphasennetz oder über ein Mehrphasennetz. Bevorzugt ist ein Dreiphasenwechselstromnetz.

In einer ersten Kabelgarnitur kann gemäß einem vorteilhaften Ausführungsbeispiel der erste Pilotleiter und ein Energieleiter angeordnet sein.

In einer zweiten Kabelgarnitur kann beispielsweise ein zweiter Pilotleiter und ein Energieleiter angeordnet sein. Die Energieleiter in der ersten und der zweiten Kabelgarnitur können miteinander in dem Gehäuse kurzgeschlossen sein.

Nachfolgend wird der Gegenstand anhand einer Ausführungsbeispiele zeigenden Zeichnung näher erläutert. In der Zeichnung zeigen:
- Fig. 1: schematisch einen Anschluss eines Elektrofahrzeugs an eine Ladestation gemäß des Standes der Technik;
- Fig. 2: schematisch einen Anschluss eines Elektrofahrzeugs an eine Ladestation mit einer zwischengeschalteten Kommunikationseinheit;
- Fig. 3: schematisch ein Blockschaltbild für den Anschluss eines Elektrofahrzeugs an eine Ladestation gemäß des Standes der Technik;
- Fig. 4: ein Blockschaltbild für den Anschluss eines Elektrofahrzeugs an eine Ladestation mit einer zwischengeschalteten Kommunikationseinheit.

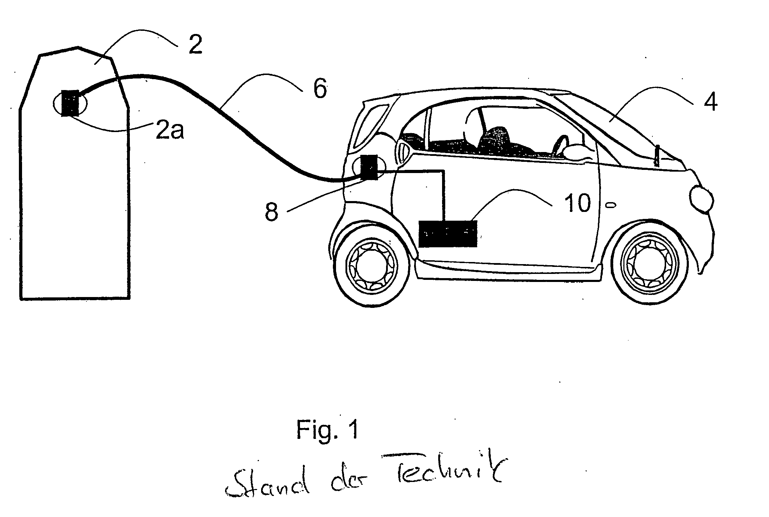

Fig. 1 zeigt eine Ladestation 2 mit einem elektrischen Anschluss 2a. An den elektrischen Anschluss 2a der Ladestation 2 kann ein Kabel 6 mit einem Stecker angeschlossen werden. Das Kabel 6 ist auf der anderen Seite an einen elektrischen Anschluss (Ladebuchse) 8 eines Elektrofahrzeugs 4 anschließbar. Über das Kabel 6 kann von der Ladestation 2 elektrische Energie an das Elektrofahrzeug 4 übertragen werden, wodurch ein Energiespeicher 10 im Elektrofahrzeug 4 aufgeladen werden kann.

In der in Fig. 1 aufgezeigten Variante ist der Austausch von primären Ladeparametern über das Kabel 6, insbesondere einen Pilotleiter in dem Kabel 6, möglich. Hierzu muss sowohl das Elektrofahrzeug 4 als auch die Ladestation 2 normgerecht arbeiten. Der Austausch von primären Ladeparametern kann zum einen eine Aufforderung zur seriellen Kommunikation und zum anderen eine Übertragung von Bemessungswerten für eine Stromversorgung sein.

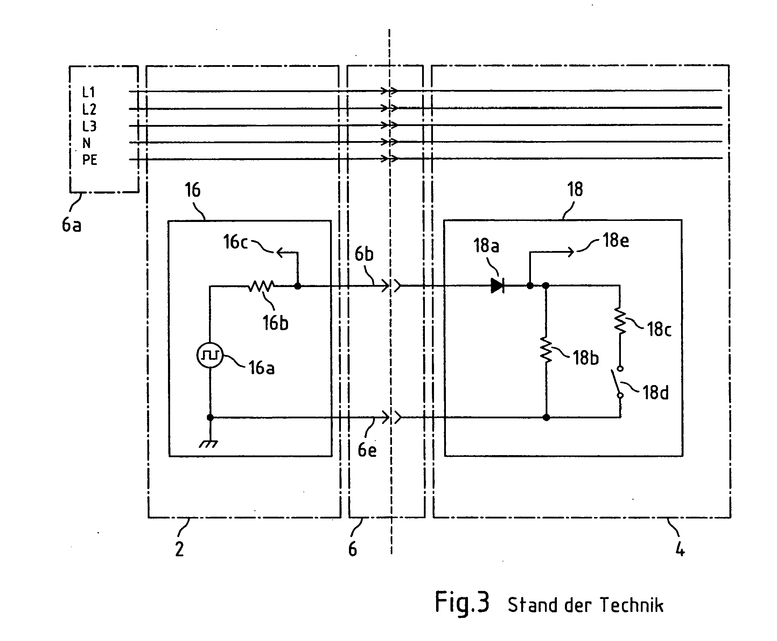

Die für den Austausch von primären Ladeparametern notwendigen Komponenten in der Ladestation 2 als auch im Elektrofahrzeug 4 sind in der Fig. 3 dargestellt.

Fig. 3 zeigt schematisch eine Ladelektronik 16 in der Ladestation 2. Die Ladeelektronik 16 weist eine OszillatorSpannungsquelle 16a, einen Ladewiderstand 16b und ein Spannungsmessgerät 16c auf. Auf der Seite des Elektrofahrzeugs 4 des Kabels 6 ist eine Fahrzeugelektronik 18 vorgesehen, welche eine Diode 18a, ein erstes Widerstandselement 18b, ein zweites Widerstandselement 18c, einen Schalter 18d und ein Messgerät 18e aufweist.

Ferner ist zu erkennen, dass das Kabel 6 einen mehradrigen Energieleiter 6a, vorliegend aus drei Phasen L1, L2, L3, einem Nullleiter N und einem Erdleiter PE gebildet, aufweist. Ferner weist das Kabel 6 einen Pilotleiter 6b und einen weiteren Erdleiter 6e auf.

Zur normgerechten Kommunikation zwischen Ladestation 2 und Elektrofahrzeug 4 übermittelt die Ladeelektronik 16 mittels der Oszillatorspannungsquelle 16a ein pulsweitenmoduliertes Signal, beispielsweise bei einer Frequenz von 1 kHz und einer Amplitude von +/-12 V über den Ladewiderstand 16b. Beispielsweise ist es möglich, dass mittels des Kommunikationssignals über den Pilotleiter 6b ein pulsweitenmoduliertes Kommunikationssignal mit einem Tastverhältnis von 90% plus minus 2% übertragen wird. Ein solches Signal signalisiert dem Elektrofahrzeug 4 die Anwesenheit eines Ladegerätes und erfordert eine serielle Datenübertragung vor Beginn des Ladeprozesses. Auch ist es möglich, dass ein Bemessungsstrom der Ladestation bzw. Information darüber mittels eines weiteren Kommunikationssignals von der Ladestation 2 an das Elektrofahrzeug 4 übermittelt werden. Hierzu kann beispielsweise ein Tastverhältnis von 5% bis 80% plus minus 2% verwendet werden, welches über den Pilotleiter 6b übertragen wird.

In dem Elektrofahrzeug 4 wird über die Diode 18a und das Widerstandselement 18b mittels des Messgerätes 18e dieses Kommunikationssignal erfasst. Stellt das Elektrofahrzeug 4 die Anwesenheit des Kommunikationssignal fest, insbesondere Information über den Bemessungsstrom, legt die Fahrzeugelektronik 18 den Schalter 18d um, so dass Teile des Stroms über das Widerstandselement 18c fließen. Der hierdurch auftretende Spannungsabfall wird auf den Pilotleiter 6b mittels des ladestationsseitigen Spannungsmessgeräts 16c detektiert. Hieraufhin kann ladestationsseitig über den Energieleiter 6a ein Ladestrom freigegeben werden.

Problematisch bei der in Fig. 3 dargestellten Anordnung ist jedoch, dass lediglich primäre Ladungsparameter, insbesondere ein Bemessungswert der Stromversorgung von der Ladestation zu dem Elektrofahrzeug 4 übertragen werden kann. Ergänzende, darüber hinausgehende Ladeparameter können nicht übertragen werden.

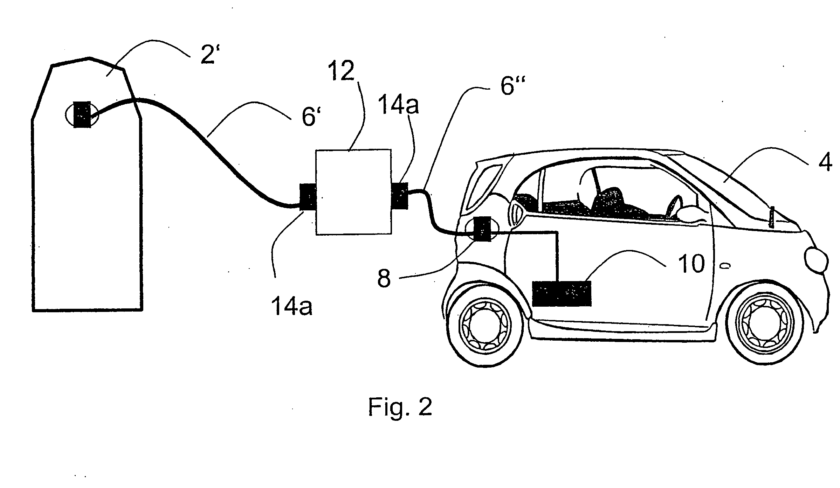

Um ein Elektrofahrzeug 4, welches eine Fahrzeugelektronik 18 aufweist, wie sie in Fig. 3 dargestellt ist, mit einer modernen Ladestation 2' zu verbinden, welche neben den primären Ladeparametern auch ergänzende Ladeparameter austauschen kann, ist eine Anordnung gemäß Fig. 2 vorgeschlagen.

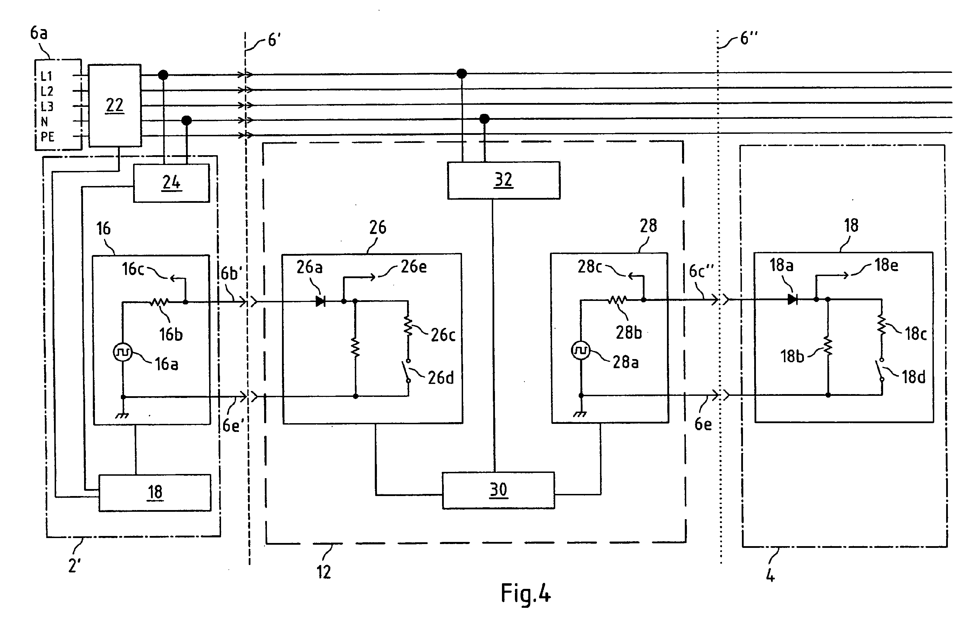

In der Fig. 2 ist eine Ladestation 2' dargestellt, welche neben den primären Ladeparametern auch ergänzende Ladeparameter über das Kabel 6' übertragen kann. Falls das Elektrofahrzeug 4 solche ergänzenden Ladeparameter nicht unterstützt, wird vorgeschlagen, eine Kommunikationseinheit 12 zwischen Elektrofahrzeug 4 und Ladestation 2' zu schalten. Hierzu wird ein erstes Kabel 6' zwischen Ladestation 2' und Kommunikationseinheit 12 geschaltet, welches mittels eines ersten Steckers 14a in die Kommunikationseinheit 12 einsteckbar ist. Ein zweites Kabel 6" wird von der Kommunikationseinheit 12 mit dem Fahrzeug 4 verbunden. Hierzu weist das zweite Kabel 6" einen zweiten Stecker 14b auf. Die Funktionsweise der Kommunikationseinheit 12 ist nachfolgend in Verbindung mit der Fig. 4 dargestellt.

Fig. 4 zeigt die Kommunikationseinheit 12 zwischen Ladestation 2' und Elektrofahrzeug 4.

Das Elektrofahrzeug 4 weist eine Fahrzeugelektronik 18 auf, welche wie in Fig. 3 beschrieben funktioniert.

Ladestationsseitig ist neben der Ladeelektronik 16 eine Steuereinrichtung 18 vorgesehen, welche zum einen die Ladeelektronik 16 mit einem Schaltelement 22 und zum anderen mit einem PLC Modem 24 verbindet. Die Steuereinrichtung 20 steuert das Schaltelement 22 derart, dass eine Stromversorgung auf dem Energieleiter 6a freigegeben oder unterbrochen werden kann.

Die Steuereinrichtung 20 steuert das PLC-Modem 24 zum Empfangen und Aussenden von ergänzenden Ladeparametern über den Energieleiter 6a.

In der Fig. 4 ist dargestellt, dass das PLC-Modem 24 zum einen mit dem Phasenleiter L1 des Energieleiters 6a und zum anderen am Nullleiter N des Energieleiters 6a gekoppelt ist. Die Kopplung kann galvanisch getrennt sein.

Die Verbindung von Ladestation 2' mit der Kommunikationseinheit 12 über das Kabel 6' ist in Fig. 4 strichpunktiert dargestellt. Die Verbindung von Kommunikationseinheit 12 mit Elektrofahrzeug 4 über das Kabel 6" ist in Fig. 4 ebenfalls strichpunktiert dargestellt.

In der Kommunikationseinheit 12 ist eine Empfangselektronik 26 vorgesehen, welche entsprechend der Fahrzeugelektronik 18 ausgestaltet ist und auch entsprechend arbeitet. Die Elemente 26a-e können den Elementen 18a-e entsprechen. Ferner ist eine Sendeelektronik 28 in der Kommunikationseinheit 12 vorgesehen. Die Sendelektronik 28 ist über das Kabel 6" mit dem Elektrofahrzeug 4 verbunden. Die Sendeelektronik 28 funktioniert entsprechend der Ladelektronik 16. Die Elemente 28a-c können den Elementen 16a-c entsprechen. Ferner ist ein Controller 30 in der Kommunikationseinheit 12 vorgesehen. Der Controller 30 steuert die Empfangselektronik 26 und die Sendeelektronik 30 und wertet die dort empfangenen Signale aus und bewirkt ein Senden von Daten über die Empfangselektronik 26 und die Sendeelektronik 30. Ferner steuert der Contorller 30 ein PLC-Modem 32. Das PLC-Modem 32 ist mit dem Phasenleiter L1 des Kabels 6' und dem Nullleiter N des Kabels 6' verbunden und kann hierüber ergänzende Ladeparameter aussenden und empfangen.

Zu Beginn eines Ladevorgangs wird der Stecker 14a in die Kommunikationseinheit 12 gesteckt und der Stecker 14b ebenfalls in die Kommunikationseinheit 12. Der Stecker 14a verbindet das Kabel 6' mit der Empfangselektronik 26. Ladestationsseitig wird das Kabel 6' mit der Ladeelektronik 16 verbunden.

Das Kabel 6" wird mit dem Stecker 14b mit der Sendelektronik 28 verbunden. Fahrzeugseitig ist das Kabel 6" mit der Fahrzeugelektronik 18 verbunden.

Zu Beginn eines Ladevorgangs wird mittels der Steuereinrichtung 20 über die Ladeelektronik 16 mittels eines pulsweitenmodulierten Signals eine Aufforderung zur seriellen Kommunikation und somit zum Austausch von primären Ladeparametern über das Kabel 6' an die Empfangselektronik 26 übermittelt. Die Empfangselektronik 26 übermittelt diese Information an den Controller 30.

Beim Empfang dieser Information steuert der Controller 30 das PLC-Modem 32 an, ergänzende Ladeparameter mit der Ladestation 2' auszutauschen. Hierzu moduliert das PLC-Modem 32 Signale auf den Energieleiter 6a, welche über das Kabel 6' an die Ladestation 2' und somit das PLC-Modem 24 übertragen werden. Dort werden die entsprechenden Signale ausgekoppelt. Gesteuert von Steuereinrichtung 20 und dem Controller 30 tauschen die PLC-Modems 24, 32 ergänzende Ladeparameter aus. Diese ergänzenden Ladeparameter können beispielsweise Benutzeridentifikationen sein. Eine Benutzeridentifikation kann beispielsweise in dem Controller 30 gespeichert werden.

Auch ist es möglich, dass die Benutzeridentifikation durch den Controller 30 berührungslos bei einem Benutzer abgefragt wird. Mittels der übermittelten Benutzeridentifikation ist es möglich, dass das PLC-Modem 24 in der Ladestation 2' verschiedene Stromtarife anbietet. Diese Stromtarife können vertragsabhängig sein, wobei der Vertrag anhand der Benutzeridentifikation ermittelt werden kann. Ferner können Informationen über Laderestriktionen ausgetauscht werden. Darüber hinaus können Zahlungsinformationen und weitere Ladeinformationen ausgetauscht werden.

Nachdem die PLC-Modems 24, 32 bzw. die Steuereinrichtung 20 und der Controller 30 die ergänzenden Ladeparameter ausgehandelt haben, steuert der Controller 30 die Sendeelektronik 28 an, dem Fahrzeug 4 über das Kabel 6" Informationen über den Bemessungswert der Stromversorgung mitzuteilen, dies kann über den zweiten Pilotleiter 6c" erfolgen. Dieser Bemessungswert kann den ergänzenden Ladeparametern entnommen werden. Das Fahrzeug 4 signalisiert die Bereitschaft zum Empfang von Ladestrom durch das Schließen des Schalters 18d, ebenfalls beispielsweise über den zweiten Pilotleiter 6c". Diese Bereitschaft wird in der Sendeelektronik 28 mittels des Spannungsmessgerätes 28c detektiert und dem Controller 30 mitgeteilt. Hieraufhin wird der Controller 30 entweder mittels des PLC-Modems 32 oder über den Pilotleiter 6b' des Kabels 6' eine Stromfreigabe bei der Ladestation anfordern. Diese Stromfreigabe wird mittels der Steuereinrichtung 20 empfangen und die Steuereinrichtung 20 schaltet das Schaltelement 22d derart, dass der Energieleiter 6a über das Kabel 6' und das Kabel 6" Energie an das Elektrofahrzeug 4 überträgt.

Für den Fall, dass die Kommunikationseinheit 12 an eine herkömmliche Ladestation 2 angeschlossen wird, empfängt die Empfangselektronik 26 ein pulsweitmoduliertes Signal von der Ladestation 2, welches Informationen zum Bemessungswert der Stromversorgung enthält, über den ersten Pilotleiter 6b. Der Controller 30 stellt den Empfang eines solchen Signals fest und versucht zunächst über das PLC-Modem 32 den Austausch von ergänzenden Ladeparametern zu initiieren. Erfolgt keine Rückmeldung hierauf durch die Ladestation 2 auf dem Kabel 6, schließt der Controller 30 daraus, dass die Ladestation 2 ergänzende Ladeparameter nicht austauschen kann.

Daraufhin fordert der Controller 30 die Sendeelektronik 28 auf, dem Fahrzeug 4 über das Kabel 6" die Bereitschaft zur Stromlieferung anzuzeigen, z.B. über den zweiten Pilotleiter 6c". Über die Sendeelektronik 28 wird ein Signal an das Fahrzeug 4 übermittelt, welches dem Signal entspricht, welches zuvor in der Empfangselektronik 26 von der Ladestation 2 empfangen wurde. Das Fahrzeug 4 signalisiert durch Schließen des Schalters 18d die Bereitschaft zum Empfangen von Ladestrom über den zweiten Pilotleiter 6c". Dies detektiert die Sendeelektronik 28 und daraufhin der Controller 30. Der Controller 30 weist daraufhin die Empfangselektronik 26 an, den Schalter 26d zu schließen, um der Ladestation 2 über den ersten Pilotleiter 6b' die Bereitschaft zum Stromempfang mitzuteilen. Anschließend wird über das Schaltelement 23 der Ladestrom freigegeben.

Es sei erwähnt, das zu Beginn und während eines Ladevorgangs als auch zum Ende eines Ladevorgangs Informationen über den Ladestatus mittels der PLC-Modems 24, 32 ausgetauscht werden können. Auch kann zum Ende eines Ladevorgangs mittels der PLC-Modems 24, 32 die bezogene Energiemenge an die Kommunikationseinheit 12 übermittelt werden. In der Kommunikationseinheit 12 kann die so bezogene Energiemenge bestätigt werden und diese Bestätigung kann über das PLC-Modem 32 an die Ladestation 2' übertragen werden.

Mittels der gegenständlichen Kommunikationseinheit ist es möglich, ergänzende Ladeparameter mit einer Ladestation auszutauschen ohne dass das Elektrofahrzeug hierfür eingerichtet ist.

## Patentansprüche

1. Verfahren zum Verbinden eines Elektrofahrzeugs (4) mit einer Ladestation (2) umfassend,
a) Empfangen auf einem mit einer Ladestation (2) verbundenen ersten Pilotleiter (6b) ein Kommunikationssignal umfassend eine ladestationsseitige Aufforderung zur Kommunikation von primären Ladeparametern, **gekennzeichnet durch**
b) Kommunizieren auf einem mit der Ladestation (2) verbundenen Energieleiter (6a) zumindest ein Ladeparametersignal umfassend zumindest Informationen über ergänzende Ladeparameter,
c) Bewirken einer Freigabe eines über den Energieleiter (6a) fließenden Ladestroms gemäß der nach b) kommunizierten ergänzenden Ladeparameter.

2. Verfahren nach Anspruch 1, **dadurch gekennzeichnet, dass** das Kommunikationssignal eine Aufforderung zur seriellen Kommunikation von Ladeparametern über den ersten Pilotleiter (6b) enthält.

3. Verfahren nach Anspruch 1 oder 2, **dadurch gekennzeichnet, dass** das Kommunikationssignal pulsweitenmoduliert ist, und/oder
dass in dem Tastverhältnis des Kommunikationssignals die Aufforderung zur Kommunikation codiert ist.

4. Verfahren nach einem der Ansprüche 1 bis 3, **dadurch gekennzeichnet, dass** das Kommunikationssignal einen ersten Gleichspannungspegel aufweist und dass in Reaktion auf das Kommunikationssignal ein zweiter Gleichspannungspegel auf dem ersten Pilotleiter (6b) bewirkt wird.

5. Verfahren nach einem der Ansprüche 1 bis 4, **dadurch gekennzeichnet, dass** die Schritte a) - c) durch eine räumlich von der Ladestation (2) und/oder dem Elektrofahrzeug (4) getrennten Kommunikationseinheit (12) durchgeführt werden.

6. Verfahren nach einem der Ansprüche 1 bis 5, **dadurch gekennzeichnet, dass** bei einem erfolgreichen Kommunizieren von Informationen über ergänzende Ladeparameter nach Schritt b) der Schritt c) eingeleitet wird, und/ oder dass bei einem erfolglosen Kommunizieren von Informationen über ergänzende Ladeparameter nach Schritt b) alternativ zu Schritt c) auf einen mit dem Elektrofahrzeug (4) verbundenen zweiten Pilotleiter (6c) ein Ladesignal umfassend einen Bemessungswert für eine Stromversorgung ausgesendet wird.

7. Verfahren nach einem der Ansprüche 1 bis 6, **dadurch gekennzeichnet, dass** bei einem Empfangen eines Ladesignals umfassend einen Bemessungswert für eine Stromversorgung auf dem ersten Pilotleiter (6b) ein entsprechendes Ladesignal auf einem zweiten Pilotleiter (6c) ausgesendet wird.

8. Vorrichtung umfassend:
- Empfangsmittel (26) eingerichtet zum Empfangen eines Kommunikationssignals umfassend eine ladestationsseitige Aufforderung zur Kommunikation von primären Ladeparametern über einen ersten Pilotleiter (6b),
- **gekennzeichnet durch** Kommunikationsmittel (30) eingerichtet zum Kommunizieren zumindest eines Ladeparametersignals umfassend zumindest Informationen über ergänzende Ladeparametern auf einem mit einer Ladestation (2) elektrisch verbundenen Energieleiter (6a), derart, dass eine Freigabe eines über den Energieleiter (6a) fließenden Ladestroms gemäß der kommunizierten Ladeparameter bewirkbar ist.

9. Vorrichtung nach Anspruch8, **dadurch gekennzeichnet, dass** die Empfangsmittel (26) mit dem ersten Pilotleiter (2b) verbindbar sind.

10. Vorrichtung nach Anspruch 8 oder 9, **dadurch gekennzeichnet, dass** Sendemittel (28) mit einem zweiten mit einem Elektrofahrzeug (4) verbindbaren Pilotleiter (6b) verbindbar sind.

11. Vorrichtung nach einem der vorangehenden Ansprüchen 8 bis 10, **dadurch gekennzeichnet, dass** Steuermittel (30) die Kommunikationsmittel (32) zum Modulieren von Signalen auf den Energieleiter (6a) ansteuern.

12. Vorrichtung nach einem der Ansprüche 8 bis 11, **dadurch gekennzeichnet, dass** die Kommunikationsmittel (32) und die Empfangsmittel (26) in einem von der Ladestation (2) und dem Elektrofahrzeug (4) getrennten Gehäuse angeordnet sind.

13. Vorrichtung nach Anspruch 12, **dadurch gekennzeichnet, dass** der Energieleiter (6a) in dem Gehäuse von einem ersten Steckkontakt (14a) zu einem zweiten Steckkontakt (14b) geführt ist,

14. Vorrichtung nach einem der vorangehenden Ansprüche 8 bis 13, **dadurch gekennzeichnet, dass** der Energieleiter (6a) ein Teil eines Ein- oder Mehrphasenleiters (6) ist, wobei der Energieleiter (6a) zur Übertragung von Energie zwischen der Ladestation (2) und dem Elektrofahrzeug (4) gebildet ist.

15. Vorrichtung nach einem der vorangehenden Ansprüche 8 bis 14, **dadurch gekennzeichnet, dass** der erste Pilotleiter (6b) und der Energieleiter (6a) in einer ersten Kabelgarnitur angeordnet sind, und/oder
dass der zweite Pilotleiter (6c) und ein Energieleiter in einer zweiten Kabelgarnitur angeordnet sind, und/oder dass der Energieleiter (6a) in dem Gehäuse mit den Kommunikationsmitteln (32) derart gekoppelt ist, dass Signale in den Energieleiter (6a) einkoppelbar sind.

## Claims

1. Method for connecting an electric vehicle (4) to a charging station (2) including
a) receiving on a first pilot lead (6b) connected to a charging station (2) a communication signal comprising a charging station-side request for communication of primary charging parameters,
b) communicating on an energy lead (6a) connected to the charging station (2) at least one charging parameter signal comprising at least information about supplementary charging parameters,
c) effecting a clearance of a charging current flowing via the energy lead (6a) according to the supplementary charging parameters communicated in accordance with b).

2. Method according to claim 1, **characterised in that** the communication signal comprises a request for serial communication of charging parameters via the first pilot lead (6b).

3. Method according to claim 1 or 2, **characterised in that** the communication signal is pulse width-modulated, and/or that the request for communication is coded in the pulse-duty factor of the communication signal.

4. Method according to one of claims 1 to 3, **characterised in that** the communication signal has a first DC voltage level and **in that** a second DC voltage level is effected on the first pilot lead (6b) in response to the communication signal.

5. Method according to one of claims 1 to 4, **characterised in that** steps a) - c) are carried out by a communication unit (12) which is spatially separate from the charging station (2) and/or the electric vehicle (4).

6. Method according to one of claims 1 to 5, **characterised in that** step c) is initiated on successful communication of information about supplementary charging parameters after step b), and/or
that a charging signal comprising a rated value for a current supply is emitted on a second pilot lead (6c) connected to the electric vehicle (4) as an alternative to step c) on unsuccessful communication of information about supplementary charging parameters after step b).

7. Method according to one of claims 1 to 6, **characterised in that**, on reception of a charging signal comprising a rated value for a power supply on the first pilot lead (6b), a corresponding charging signal is emitted on a second pilot lead (6c).

8. Device comprising:
- reception means (26) configured for receiving a communication signal comprising a charging station-side request for communication of primary charging parameters via a first pilot lead (6b), **characterized by**
- communication means configured for communicating at least one charging parameter signal comprising at least information about supplementary charging parameters on an energy lead (6a) electrically connected to a charging station (2) in such a way that a clearance of a charging current flowing via the energy lead (6a) is effectable in accordance with the communicated charging parameters.

9. Device according to claim 8, **characterised in that** the reception means (26) are connectable to the first pilot lead (2b).

10. Device according to claim 8 or 9, **characterised in that** transmission means (28) are connectable to a second pilot lead (6b) which can be connected to an electric vehicle (4).

11. Device according to one of the preceding claims 8 to 10, **characterised in that** control means (30) activate the communication means (32) for modulating signals onto the energy lead (6a).

12. Device according to one of claims 8 to 11, **characterised in that** the communication means (32) and the reception means (26) are arranged in a housing which is separate from the charging station (2) and the electric vehicle (4).

13. Device according to claim 12, **characterised in that** the energy lead (6a) is guided in the housing from a first plug contact (14a) to a second plug contact (14b).

14. Device according to one of the preceding claims 8 to 13, **characterised in that** the energy lead (6a) is part of a single-phase or multiphase lead (6), the energy lead (6a) being formed for transmitting energy between the charging station (2) and the electric vehicle (4).

15. Device according to one of the preceding claims 8 to 14, **characterised in that** the first pilot lead (6b) and the energy lead (6a) are arranged in a first cable set, and/or that the second pilot lead (6c) and an energy lead are arranged in a second cable set, and/or
that the energy lead (6a) is coupled in the housing to the communication means (32) so as to allow signals to be coupled into the energy lead (6a).

## Revendications

1. Procédé pour le raccordement d'un véhicule électrique (4) à une station de charge (2), comprenant les étapes suivantes :
a) Réception, sur un premier conducteur pilote (6b), relié à une station de charge (2), d'un signal de communication comprenant une demande, côté station de charge (2), de communication de paramètres de charge primaires, **caractérisé par**
b) communication sur un conducteur d'énergie (6a), relié à la station de charge (2), d'au moins un signal de paramètres de charge, comprenant au moins des informations sur des paramètres de charge complémentaires,
c) Libération d'un courant de charge passant par l'intermédiaire du conducteur d'énergie (6a) conformément aux paramètres de charge complémentaires communiqués selon b).

2. Procédé selon la revendication 1, **caractérisé en ce que** le signal de communication contient une demande de communication en série de paramètres de charge par l'intermédiaire du premier conducteur pilote (6b).

3. Procédé selon revendication 1 ou 2, **caractérisé en ce que** le signal de communication est modulé en largeur d'impulsion et / ou que la demande de communication est codée dans le cycle utile du signal de communication.

4. Procédé selon l'une des revendications 1 à 3, **caractérisé en ce que** le signal de communication présente un premier niveau de tension continue et que, en réaction au signal de communication, un deuxième niveau de tension continue accompli sur le premier conducteur pilote (6b).

5. Procédé selon l'une des revendications 1 à 4, **caractérisé en ce que** les étapes a) à c) sont exécutées par une unité de communication (12), qui est localement séparée de la station de charge (2) et / ou du véhicule électrique (4).

6. Procédé selon l'une des revendications 1 à 5, **caractérisé en ce que**, après une communication fructueuse d'informations relatives à des paramètres complémentaires selon étape b), l'étape c) est initialisée et / ou que, lors d'une communication infructueuse d'informations relatives à des paramètres complémentaires selon étape b), un signal de charge comprenant une valeur de mesure de l'alimentation pour une alimentation en courant est émis par l'intermédiaire d'un deuxième conducteur pilote (6c) relié au véhicule électrique (4), en tant qu'alternative à l'étape c).

7. Procédé selon l'une des revendications 1 à 6, **caractérisé en ce que**, lors de la réception, sur le premier conducteur pilote (6b), d'un signal de charge comprenant une valeur de mesure pour une alimentation en courant, un signal de charge correspondant est émis sur un deuxième conducteur pilote (6c).

8. Dispositif comprenant :
- des moyens de réception (26) aménagés pour la réception d'un signal de communication comprenant une demande côté station de charge de communication de paramètres de charge primaires par l'intermédiaire d'un premier conducteur pilote (6b),
- **caractérisé par** des moyens de communication (30), aménagés pour la communication d'au moins un signal de paramètres de charge, comprenant au moins des informations sur des paramètres de charge complémentaires, sur un conducteur d'énergie (6a), qui est relié électriquement à une station de charge (2), de sorte qu'une libération d'un courant passant par l'intermédiaire du conducteur d'énergie (6a) de charge puisse être obtenue conformément au paramètre de charge communiqués.

9. Dispositif selon la revendication 8, **caractérisé en ce que** les moyens de réception (26) peuvent être raccordés au premier conducteur pilote (6b).

10. Dispositif selon revendication 8 ou 9, **caractérisé en ce que** des moyens d'émission (28) peuvent être reliés à un premier conducteur pilote (6b), qui peut être raccordé à un véhicule électrique (4).

11. Dispositif selon l'une des revendications 8 à 10, **caractérisé en ce que** les moyens de commande (30) excitent les moyens de communication (32) pour la modulation de signaux sur le conducteur d'énergie (6a).

12. Dispositif selon l'une des revendications 8 à 11, **caractérisé en ce que** les moyens de communications (32) et les moyens de réception (26) sont agencés dans un boîtier, qui est séparé de la station de charge (2) et du véhicule électrique (4).

13. Dispositif selon la revendication 12, **caractérisé en ce que** le conducteur d'énergie (6a) est conduit, dans le boîtier, d'un premier contact enfichable (14a) à un deuxième contact enfichable (14b).

14. Dispositif selon l'une des revendications 8 à 13, **caractérisé en ce que** le conducteur d'énergie (6a) est un composant d'un conducteur monophasé ou polyphasé (6), sachant que le conducteur d'énergie (6a) est conçu pour le transfert d'énergie entre la station de charge (2) et le véhicule électrique (4).

15. Dispositif selon l'une des revendications 8 à 14, **caractérisé en ce que** le premier conducteur pilote (6b) et le conducteur d'énergie (6a) sont agencés dans un premier câble, et / ou **en ce que** le deuxième conducteur pilote (6c) et un conducteur d'énergie sont agencés dans le boîtier, avec les moyens de communication (32), en étant couplés de sorte que des signaux soient couplés dans le conducteur d'énergie (6a).
